# EUROPEAN PATENT APPLICATION

(11) **EP 4 354 321 A1**
(43) Date of publication of application: **17.04.2024**
(21) Application number: 23189454.4
(22) Date of filing: 03.08.2023
(51) Int. Cl.: G06F 16/901, G06N 3/00

(54) **DETERMINATION PROGRAM, DETERMINATION METHOD, AND INFORMATION PROCESSING DEVICE**

(30) Priority: 11.10.2022 JP 2022163582
(71) Applicant: FUJITSU LIMITED, Kawasaki-shi, Kanagawa 211-8588 (JP)
(72) Inventor: KOMIKADO, Tao, Kawasaki-shi, Kanagawa, 211-8588 (JP); MARUHASHI, Koji, Kawasaki-shi, Kanagawa, 211-8588 (JP)
(74) Representative: Hoffmann Eitle

(57) **Abstract**

A determination program including instructions which, when executed by a computer, cause the computer to execute processing including: acquiring a first determination result of first graph data by performing determination processing on the first graph data; acquiring one or more first scores regarding a feature of the first graph data by using a trained model, the one or more first scores representing a basis of the first determination result of the first graph data, the trained model being a model configured to output, in response to obtaining graph data, one or more scores regarding the feature of the graph data; in a case where all of the one or more first scores are less than a threshold, specifying second graph data being a second determination result different from the first determination result; and outputting, in association with the first determination result, information regarding the feature of the second graph data.

## Description

### FIELD

The embodiment discussed herein is related to a determination program, a determination method, and an information processing device.

### BACKGROUND

Since before, there is a technology called explainable artificial intelligence (XAI) for presenting a basis of a determination result when determination processing is performed. For example, there is graph XAI (GXAI) that presents, as a basis of a determination result of a graph neural network (GNN) for graph data, a score regarding a predetermined topological feature corresponding to each element of an adjacency matrix of the graph data.

As a prior art, for example, there is a technology of performing predetermined determination processing for graph data in a black box manner by using the GNN to acquire a determination result of the graph data.

Yuan, Hao, et al., "Explainability in graph neural networks: A taxonomic survey" arXiv preprint arXiv:2012.15445 (2020) is disclosed as related art.

### SUMMARY

### TECHNICAL PROBLEM

However, in the prior art, it may be difficult for a user to appropriately interpret the basis of the presented determination result. For example, in a case where it is presented as the basis of the determination result that the scores corresponding to all the elements of the adjacency matrix are relatively small, it is difficult for the user to determine whether to interpret that the predetermined topological feature does not appear or interpret that it is failed to specify the basis of the determination result.

In one aspect, an object of an embodiment is to present information that facilitates interpretation of a basis of a determination result.

### SOLUTION TO PROBLEM

According to an aspect of the embodiments, there is provided a determination program including instructions which, when executed by a computer, cause the computer to execute processing including: acquiring a first determination result of first graph data by performing predetermined determination processing on the first graph data; acquiring one or more first scores regarding a predetermined feature of the first graph data by using a trained machine learning model, the one or more first scores including one or more scores representing a basis of the first determination result of the first graph data, the trained machine learning model being a trained model configured to output, in response to obtaining graph data, one or more scores regarding the predetermined feature of the graph data; in a case where all the first scores of the acquired one or more first scores are less than a threshold, referring to a storage device, to specify among one or more pieces of graph data, second graph data that is a second determination result different from the acquired first determination result, the storage device being a device that stores, for each piece of graph data of the one or more pieces of graph data, a determination result obtained by performing the predetermined determination processing on the piece of graph data; and outputting, in association with the acquired first determination result, information regarding the predetermined feature of the specified second graph data.

### ADVANTAGEOUS EFFECTS OF INVENTION

According to one aspect, it is possible to present information that facilitates interpretation of a basis of a determination result.

### BRIEF DESCRIPTION OF DRAWINGS

FIG. 1 is an explanatory diagram illustrating an example of a determination method according to an embodiment;
FIG. 2 is an explanatory diagram illustrating an example of an information processing system 200;
FIG. 3 is a block diagram illustrating a hardware configuration example of an information processing device 100;
FIG. 4 is an explanatory diagram illustrating an example of content stored in a history information management table 400;
FIG. 5 is a block diagram illustrating a functional configuration example of the information processing device 100;
FIG. 6 is an explanatory diagram (part 1) illustrating an operation example of the information processing device 100;
FIG. 7 is an explanatory diagram (part 2) illustrating the operation example of the information processing device 100;
FIG. 8 is an explanatory diagram (part 3) illustrating the operation example of the information processing device 100;
FIG. 9 is an explanatory diagram (part 4) illustrating the operation example of the information processing device 100; and
FIG. 10 is a flowchart illustrating an example of an overall processing procedure.

### DESCRIPTION OF EMBODIMENTS

Hereinafter, an embodiment of a determination program, a determination method, and an information processing device will be described in detail with reference to the drawings.

### (Example of Determination Method According to Embodiment)

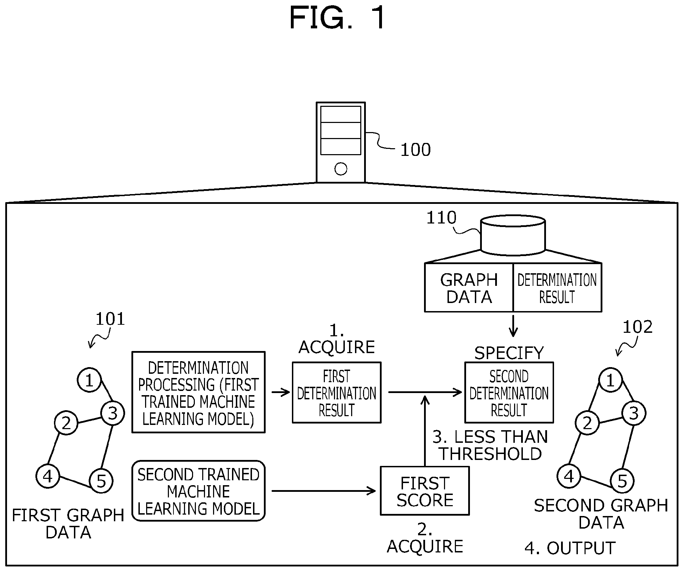

FIG. 1 is an explanatory diagram illustrating an example of the determination method according to the embodiment. An information processing device 100 is a computer for presenting information that facilitates interpretation of a basis of a determination result. The information processing device 100 is, for example, a server, a personal computer (PC), or the like.

The determination result is generated by, for example, determination processing for graph data. The graph data indicates, for example, a graph formed by one or more nodes and one or more edges coupling the nodes. The graph data indicates, for example, a graph representing a structure of a compound. The determination result may be adopted as, for example, a label, and given to the graph data.

The determination processing is, for example, processing of determining a property of the compound indicated by the graph data. The determination processing specifically determines whether or not the compound indicated by the graph data has toxicity. The determination processing is specifically performed by using a graph neural network (GNN) model. The GNN model is specifically a model that performs the determination processing for the graph data in response to input of the graph data and outputs a determination result. The GNN model specifically performs the determination processing for the graph data in a black box manner. For an example of the GNN model, specifically, Yuan, Hao, et al., "Explainability in graph neural networks: A taxonomic survey" arXiv preprint arXiv:2012.15445 (2020) described above may be referred to.

Here, a user may desire to grasp a basis of the determination result for the graph data. For example, in order to subsequently handle or study the compound indicated by the graph data, the user may desire to grasp the determination result for the graph data and to grasp the basis of the determination result.

Here, for example, it is assumed that the GNN model performs the determination processing for the graph data in the black box manner, but performs the determination processing according to whether or not a specific topological feature appears in the graph data. It is assumed that, specifically, when the specific topological feature appears in the graph data, the GNN model determines that the compound indicated by the graph data has a specific property corresponding to the specific topological feature. It is assumed that, specifically, when the specific topological feature does not appear in the graph data, the GNN model determines that the compound indicated by the graph data does not have a specific property corresponding to the specific topological feature.

A graph XAI (GXAI) model that estimates the basis of the determination result of the GNN model for the graph data based on the assumption described above and enables presentation of the basis to the user may be considered. For example, the GXAI model calculates and outputs, in response to the input of the graph data, a score regarding a predetermined topological feature corresponding to each element of an adjacency matrix of the graph data, which represents the basis of the determination result of the GNN. For example, by using the GXAI model, it is possible to output, as the basis of the determination result of the GNN model for the graph data, the score regarding the predetermined topological feature corresponding to each element of the adjacency matrix of the graph data, so as to be referable by the user.

However, it may be difficult for the user to appropriately interpret the presented basis of the determination result. For example, a case may be considered where the GNN model determines that the compound indicated by the graph data does not have the specific property corresponding to the specific topological feature since the specific topological feature does not appear in the graph data. In this case, since the specific topological feature does not appear in the graph data, the GXAI model calculates the score corresponding to each element of the adjacency matrix of the graph data so that a value of the score corresponding to each element of the adjacency matrix of the graph data becomes relatively small.

On the other hand, it may be considered that accuracy of the GXAI model deteriorates due to circumstances such as a shortage of the number of pieces of training data used for generation of the GXAI model at the time of the generation of the GXAI model. The accuracy is, for example, accuracy of determining whether or not the specific topological feature appears in the graph data. For example, it may be considered that the GXAI model with poor accuracy erroneously determines that the specific topological feature does not appear in the graph data, and the value of the score corresponding to each element of the adjacency matrix of the graph data becomes relatively small.

In this way, the event that the value of the score corresponding to each element of the adjacency matrix of the graph data is relatively small may be interpreted to mean that the specific topological feature does not appear in the graph data or mean that the accuracy of the GXAI model is poor. Therefore, it is difficult for the user to appropriately interpret the event that the value of the score corresponding to each element of the adjacency matrix of the graph data, which is presented as the basis of the determination result, is relatively small.

For example, the user is unable to appropriately determine whether or not the event that score corresponding to each element of the adjacency matrix of the graph data is relatively small may be interpreted to mean that the specific topological feature does not appear in the graph data. For example, without being able to trust the accuracy of the GXAI model, it is difficult for the user to be convinced of the event that the score corresponding to each element of the adjacency matrix of the graph data is relatively small as meaning that the specific topological feature does not appear in the graph data.

Therefore, in the present embodiment, a determination method capable of presenting information that facilitates interpretation of a basis of a determination result will be described.

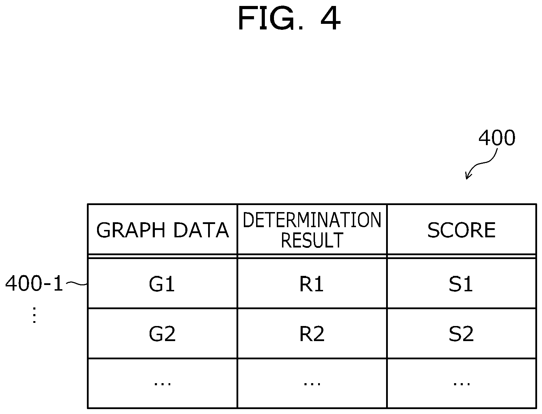

In FIG. 1, the information processing device 100 includes a storage unit 110. The storage unit 110 stores a determination result of each piece of graph data of one or more pieces of graph data by predetermined determination processing. The storage unit 110 corresponds to, for example, a history information management table 400 described later with reference to FIG. 4.

For example, the predetermined determination processing is performed by using a first trained machine learning model that performs determination processing for graph data in response to input of the graph data and outputs a determination result. The first trained machine learning model is, for example, a GNN model. The predetermined determination processing specifically determines whether or not a compound indicated by the graph data has toxicity. The information processing device 100 may store, for example, the first trained machine learning model.

The information processing device 100 stores a second trained machine learning model that calculates, in response to the input of the graph data, one or more scores regarding a predetermined feature of the graph data, which represents a basis of the determination result of the graph data by the predetermined determination processing. The predetermined feature is, for example, a topological feature. The topological feature is, for example, a feature that appears in a coupling relationship between nodes in the graph data. The second trained machine learning model is, for example, a GXAI model. The one or more scores include, for example, a score corresponding to each element of an adjacency matrix of the graph data.

The information processing device 100 acquires first graph data 101 to be processed. The information processing device 100 acquires the first graph data 101 by, for example, accepting input of the first graph data 101 based on an operation input from a user. The information processing device 100 acquires the first graph data 101 by, for example, receiving the first graph data 101 from another computer.

The information processing device 100 acquires a first determination result of the first graph data 101 by the predetermined determination processing. The information processing device 100 acquires the first determination result of the first graph data 101 by the predetermined determination processing by, for example, performing the predetermined determination processing for the acquired first graph data 101 by using the first trained machine learning model, and generates the first determination result.
(1-2) The information processing device 100 acquires one or more first scores regarding a predetermined feature of the first graph data 101, which are calculated by using the second trained machine learning model. The one or more first scores are, for example, scores regarding a predetermined topological feature corresponding to the respective elements of an adjacency matrix of the first graph data 101. The information processing device 100 acquires the one or more first scores regarding the predetermined feature of the first graph data 101 by, for example, calculating the one or more first scores regarding the predetermined feature of the first graph data 101 by using the second trained machine learning model.
(1-3) In a case where all the first scores of the acquired one or more first scores are less than a threshold, the information processing device 100 refers to the storage unit 110 to specify second graph data 102 that is a second determination result different from the acquired first determination result among the one or more pieces of graph data. The second determination result is, for example, a determination result indicating content reverse to that of the first determination result.
(1-4) The information processing device 100 outputs information regarding a predetermined feature of the specified second graph data 102 in association with the acquired first determination result. The information regarding the predetermined feature of the second graph data 102 is, for example, the second graph data 102 itself. The information regarding the predetermined feature of the second graph data 102 may be, for example, one or more second scores regarding the predetermined feature of the second graph data 102, which are calculated by using the second trained machine learning model.

The one or more second scores are, for example, scores regarding a predetermined topological feature corresponding to the respective elements of an adjacency matrix of the second graph data 102. The one or more second scores are specifically scores regarding the predetermined topological feature corresponding to the respective elements of the adjacency matrix of the second graph data 102, which are calculated by using the second trained machine learning model. With this configuration, the information processing device 100 may present information that facilitates interpretation of a basis of the first determination result.

The information processing device 100 outputs, for example, the second graph data 102 itself and the one or more first scores in association with the first determination result, so as to be referable by a user. The information processing device 100 may specifically output the first graph data 101, the one or more first scores, the second graph data 102, and the second determination result in association with the first determination result, so as to be referable by the user.

With this configuration, for example, the information processing device 100 may allow the user to compare the first graph data 101 with the second graph data 102. The information processing device 100 may refer to a result of the comparison between the first graph data 101 and the second graph data 102 to make it easier for the user to interpret what the one or more first scores as the basis of the first determination result mean.

The information processing device 100 outputs, for example, the one or more second scores regarding the predetermined feature of the second graph data 102 in association with the first determination result, so as to be referable by a user. The information processing device 100 may specifically output the first graph data 101, the one or more first scores, the second graph data 102, the one or more second scores, and the second determination result in association with the first determination result, so as to be referable by the user.

With this configuration, for example, the information processing device 100 may allow the user to compare the one or more first scores and the one or more second scores. The information processing device 100 may refer to a result of the comparison between the one or more first scores and the one or more second scores to make it easier for the user to interpret what the one or more first scores as the basis of the first determination result mean.

In a case where at least any one first score of the acquired one or more first scores is equal to or greater than the threshold, the information processing device 100 outputs the acquired one or more first scores in association with the first determination result. In a case where at least any one first score of the acquired one or more first scores is equal to or greater than the threshold, the information processing device 100 does not have to specify the second graph data 102.

The information processing device 100 outputs, for example, the first graph data 101 and the one or more first scores in association with the first determination result, so as to be referable by a user. With this configuration, the information processing device 100 may allow the user to interpret the one or more first scores as the basis of the first determination result.

Here, a case has been described where the information processing device 100 performs the predetermined determination processing for the first graph data 101. However, the embodiment is not limited to this. For example, there may be a case where another computer performs the predetermined determination processing for the first graph data 101. In this case, the information processing device 100 acquires the first determination result of the first graph data 101 by the predetermined determination processing by, for example, receiving the first determination result from the another computer.

Here, a case has been described where the information processing device 100 calculates the one or more first scores regarding the predetermined feature of the first graph data 101 by using the second trained machine learning model. However, the embodiment is not limited to this. For example, there may be a case where another computer calculates the one or more first scores regarding the predetermined feature of the first graph data 101 by using the second trained machine learning model. In this case, the information processing device 100 acquires the one or more first scores regarding the predetermined feature of the first graph data 101 by, for example, receiving the one or more first scores from the another computer.

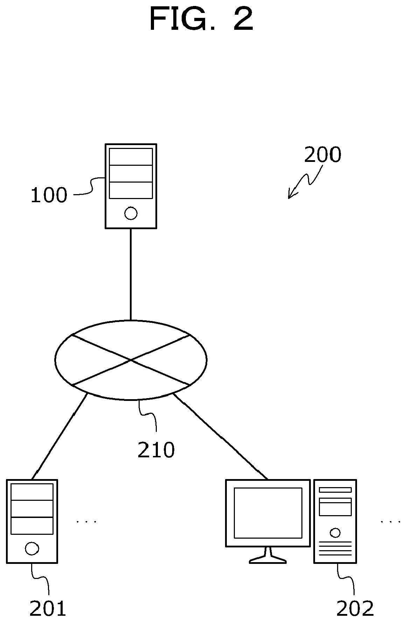

Here, a case has been described where the information processing device 100 operates independently. However, the embodiment is not limited to this. For example, there may be a case where the information processing device 100 cooperates with another computer, as described above. For example, there may be a case where a plurality of computers implements a function as the information processing device 100. Specifically, there may be a case where the function as the information processing device 100 is implemented in a cloud. An example of the case where the information processing device 100 cooperates with another computer will be specifically described later with reference to FIG. 2.

### (Example of Information Processing System 200)

Next, an example of an information processing system 200 to which the information processing device 100 illustrated in FIG. 1 is applied will be described with reference to FIG. 2. The information processing system 200 corresponds to the case where the information processing device 100 illustrated in FIG. 1 cooperates with another computer.

FIG. 2 is an explanatory diagram illustrating an example of the information processing system 200. In FIG. 2, the information processing system 200 includes the information processing device 100, a determination processing device 201, and a client device 202.

In the information processing system 200, the information processing device 100 and the determination processing device 201 are coupled via a wired or wireless network 210. The network 210 is, for example, a local area network (LAN), a wide area network (WAN), the Internet, or the like. Furthermore, in the information processing system 200, the information processing device 100 and the client device 202 are coupled via the wired or wireless network 210.

The information processing device 100 is a computer for enabling presentation of information that facilitates interpretation of a basis of a determination result by predetermined determination processing for graph data. The graph data is data representing a graph. The graph data indicates, for example, one or more nodes forming the graph and one or more edges coupling the nodes. The predetermined determination processing is, for example, determination processing of determining a property of a compound indicated by the graph data. The predetermined determination processing is, for example, determination processing performed by using a GNN model.

The information processing device 100 stores each piece of graph data of one or more pieces of graph data in the storage unit in association with a determination result of the graph data by the predetermined determination processing. The information processing device 100 stores, for example, a record in which each piece of graph data is associated with the determination result of the graph data by the predetermined determination processing, by using the history information management table 400 described later with reference to FIG. 4.

The information processing device 100 may store each piece of graph data of the one or more pieces of graph data in the storage unit in association with a score corresponding to each element of an adjacency matrix of the graph data, which is calculated by predetermined calculation processing as a basis of the determination result of the graph data. The predetermined calculation processing is, for example, estimation processing of estimating the basis of the determination result of the graph data by the predetermined determination processing.

The predetermined calculation processing is specifically calculation processing of calculating a score regarding a predetermined topological feature corresponding to each element of the adjacency matrix of the graph data as the basis of the determination result of the graph data by the predetermined determination processing. The information processing device 100 stores a record in which each piece of graph data is associated with the score corresponding to each element of the adjacency matrix of the graph data, which is calculated by the predetermined calculation processing, by using, for example, the history information management table 400 described later with reference to FIG. 4.

The information processing device 100 acquires first graph data to be processed. The information processing device 100 acquires the first graph data to be processed by, for example, receiving a determination request including the first graph data to be processed from the client device 202, and extracting the first graph data to be processed from the determination request.

The information processing device 100 generates a first processing request for requesting to perform the predetermined determination processing and the predetermined calculation processing for the first graph data, and transmits the first processing request to the determination processing device 201. As a response to the first processing request, the information processing device 100 receives, from the determination processing device 201, a first determination result of the first graph data by the predetermined determination processing and a first score corresponding to each element of an adjacency matrix of the first graph data. The information processing device 100 determines whether or not the first score corresponding to each element of the adjacency matrix of the first graph data is equal to or greater than a threshold.

In a case where the first scores corresponding to all the elements of the adjacency matrix of the first graph data are less than the threshold and there is no first score equal to or greater than the threshold, the information processing device 100 searches the storage unit for second graph data as a second determination result different from the first determination result. The information processing device 100 searches the storage unit for, for example, second graph data as a second determination result indicating content reverse to that of the first determination result.

In a case where the second graph data is found, the information processing device 100 acquires, from the storage unit, the second determination result of the second graph data and a second score corresponding to each element of an adjacency matrix of the second graph data, which is calculated by the predetermined calculation processing. As a response to the determination request, the information processing device 100 transmits, to the client device 202, the first graph data, the first determination result, the second graph data, the second determination result, and the second score.

In a case where the first score corresponding to at least any one element of the adjacency matrix of the first graph data is equal to or greater than the threshold, the information processing device 100 transmits, to the client device 202, the first determination result and the first score as the response to the determination request. The information processing device 100 is used by, for example, a system administrator. The information processing device 100 is, for example, a server, a PC, or the like.

The determination processing device 201 is a computer for performing the predetermined determination processing and the predetermined calculation processing for the graph data. The determination processing device 201 receives the first processing request including the first graph data to be processed from the information processing device 100. The determination processing device 201 acquires the first graph data to be processed by extracting the first graph data to be processed from the received first processing request.

The determination processing device 201 performs the predetermined determination processing for the acquired first graph data, and generates the first determination result of the first graph data by the predetermined determination processing. The determination processing device 201 performs the predetermined calculation processing for the acquired first graph data, and calculates the first score corresponding to each element of the adjacency matrix of the first graph data. The determination processing device 201 transmits the generated first determination result and the calculated first score to the information processing device 100. The determination processing device 201 is used by, for example, the system administrator. The determination processing device 201 is, for example, a server, a PC, or the like.

The client device 202 is a computer used by a system user. The system user is, for example, a worker who desires to refer to and grasp a determination result of the first graph data. For example, based on an operation input from the system user, the client device 202 generates the first graph data to be processed and generates the determination request including the generated first graph data. The client device 202 transmits the generated determination request to the information processing device 100.

The client device 202 receives the response to the determination request from the information processing device 100. As the response to the determination request, the client device 202 receives the first graph data, the first determination result, the second graph data, the second determination result, and the second score. The client device 202 outputs the first graph data, the first determination result, the second graph data, the second determination result, and the second score that are received as the response to the determination request in association with each other, so as to be referable by the system user.

As the response to the determination request, the client device 202 receives the first determination result and the first score from the information processing device 100. The client device 202 outputs the first determination result and the first score that are received as the response to the determination request in association with each other, so as to be referable by the system user. The client device 202 is, for example, a PC, a tablet terminal, a smartphone, or the like.

Here, a case has been described where the information processing device 100 and the determination processing device 201 are different devices. However, the embodiment is not limited to this. For example, there may be a case where the information processing device 100 has a function as the determination processing device 201 and operates also as the determination processing device 201.

Here, a case has been described where the information processing device 100 and the client device 202 are different devices. However, the embodiment is not limited to this. For example, there may be a case where the information processing device 100 has a function as the client device 202 and operates also as the client device 202. In the following description, a case will be mainly described where the information processing device 100 operates independently.

### (Use Example of Information Processing System 200)

Next, a use example of the information processing system 200 illustrated in FIG. 2 will be described. The information processing system 200 may be used in a case where, for example, graph data representing a compound is to be processed. The information processing system 200 may be used specifically in a case where a worker desires to refer to and grasp a determination result obtained by determining a property of the compound represented by the graph data. The property is, for example, presence or absence of toxicity. The information processing system 200 may specifically make it easier for the worker to be convinced of a basis, a reason, or the like of the determination result obtained by determining the property of the compound represented by the graph data.

### (Hardware Configuration Example of Information Processing Device 100)

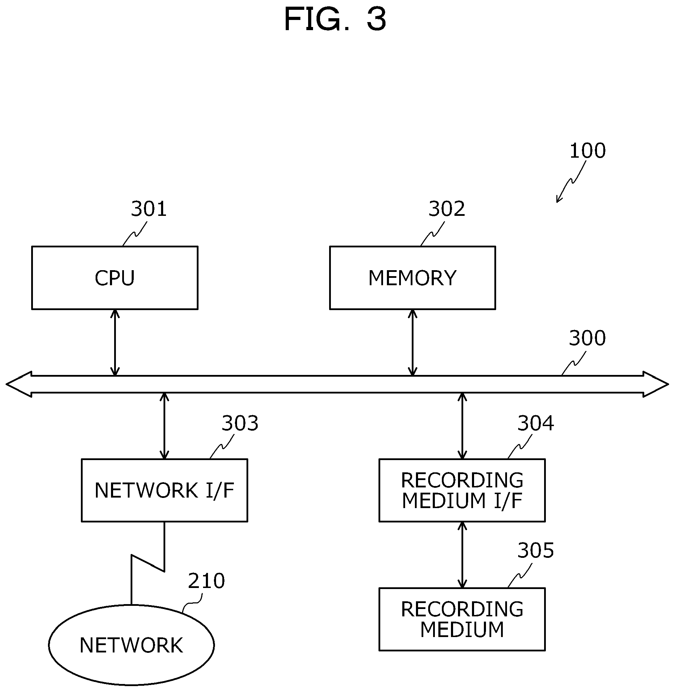

Next, a hardware configuration example of the information processing device 100 will be described with reference to FIG. 3.

FIG. 3 is a block diagram illustrating the hardware configuration example of the information processing device 100. In FIG. 3, the information processing device 100 includes a central processing unit (CPU) 301, a memory 302, a network interface (I/F) 303, a recording medium I/F 304, and a recording medium 305. Furthermore, the individual components are coupled to each other by a bus 300.

Here, the CPU 301 performs overall control of the information processing device 100. The memory 302 includes, for example, a read only memory (ROM), a random access memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing. The memory 302 stores, for example, the history information management table 400 described later with reference to FIG. 4.

The network I/F 303 is coupled to the network 210 through a communication line, and is coupled to another computer via the network 210. Then, the network I/F 303 manages an interface between the network 210 and the inside, and controls input and output of data from another computer. The network I/F 303 is, for example, a modem, a LAN adapter, or the like.

The recording medium I/F 304 controls read and write of data from and to the recording medium 305 under the control of the CPU 301. The recording medium I/F 304 is, for example, a disk drive, a solid state drive (SSD), a universal serial bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be attachable to and detachable from the information processing device 100.

The information processing device 100 may include, for example, a keyboard, a mouse, a display, a printer, a scanner, a microphone, a speaker, or the like in addition to the components described above. Furthermore, the information processing device 100 may include a plurality of the recording medium I/Fs 304 and the recording media 305. Furthermore, the information processing device 100 does not have to include the recording medium I/F 304 or the recording medium 305.

### (Content Stored in History Information Management Table 400)

Next, an example of content stored in the history information management table 400 will be described with reference to FIG. 4. The history information management table 400 is implemented by, for example, a storage area such as the memory 302 or the recording medium 305 of the information processing device 100 illustrated in FIG. 3.

FIG. 4 is an explanatory diagram illustrating an example of the content stored in the history information management table 400. As illustrated in FIG. 4, the history information management table 400 includes fields of graph data, a determination result, and a score. The history information management table 400 stores history information as a record 400-a by setting information in each field for each piece of graph data. An optional integer is denoted by a.

In the graph data field, graph data is set. In the graph data field, information that specifies graph data may be set. In the determination result field, a determination result of the graph data described above by the predetermined determination processing is set. In the determination result field, specifically, the determination result of the graph data described above by a GNN model is set. In the score field, a score representing a basis of the determination result described above is set.

In the score field, for example, a score regarding a predetermined topological feature corresponding to each element of an adjacency matrix of the graph data described above is set. In the score field, specifically, the score regarding the predetermined topological feature corresponding to each element of the adjacency matrix of the graph data described above, which is calculated by a GXAI model, is set.

### (Hardware Configuration Example of Determination Processing Device 201)

Since a hardware configuration example of the determination processing device 201 is specifically similar to the hardware configuration example of the information processing device 100 illustrated in FIG. 3, the description thereof will be omitted.

### (Hardware Configuration Example of Client Device 202)

Since a hardware configuration example of the client device 202 is specifically similar to the hardware configuration example of the information processing device 100 illustrated in FIG. 3, the description thereof will be omitted.

### (Functional Configuration Example of Information Processing Device 100)

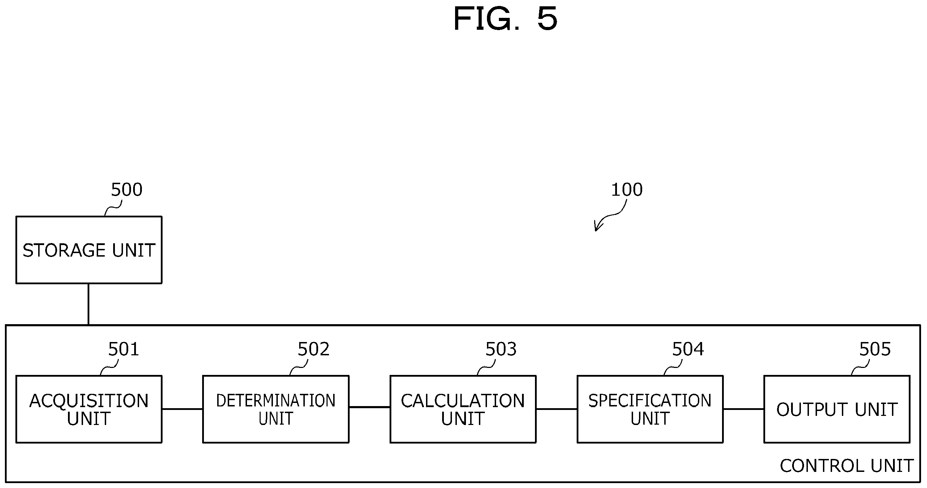

Next, a functional configuration example of the information processing device 100 will be described with reference to FIG. 5.

FIG. 5 is a block diagram illustrating the functional configuration example of the information processing device 100. The information processing device 100 includes a storage unit 500, an acquisition unit 501, a determination unit 502, a calculation unit 503, a specification unit 504, and an output unit 505.

The storage unit 500 is implemented by, for example, a storage area such as the memory 302 or the recording medium 305 illustrated in FIG. 3. Hereinafter, a case will be described where the storage unit 500 is included in the information processing device 100. However, the embodiment is not limited to this. For example, there may be a case where the storage unit 500 is included in a device different from the information processing device 100, and the information processing device 100 may refer to content stored in the storage unit 500.

The acquisition unit 501 to the output unit 505 function as an example of a control unit. Specifically, for example, the acquisition unit 501 to the output unit 505 implement functions thereof by causing the CPU 301 to execute a program stored in a storage area such as the memory 302 or the recording medium 305, or by the network I/F 303, illustrated in FIG. 3. A processing result of each functional unit is stored in, for example, a storage area such as the memory 302 or the recording medium 305 illustrated in FIG. 3.

The storage unit 500 stores various types of information referred to or updated in processing of each functional unit. The storage unit 500 stores, for example, the first trained machine learning model. The first trained machine learning model is, for example, a trained machine learning model that calculates, in response to input of graph data, a score corresponding to each element of an adjacency matrix of the graph data regarding a predetermined feature of the graph data, which represents a basis of a determination result of the graph data by predetermined determination processing. The first trained machine learning model is specifically a GXAI model.

The predetermined feature is, for example, a feature regarding a coupling relationship between nodes in a graph represented by the graph data. The predetermined feature is specifically a network topological feature. The node corresponds to, for example, an element forming a compound represented by the graph. The storage unit 500 specifically stores a first parameter that defines the first trained machine learning model. The first trained machine learning model is set in advance by, for example, a user of the own device. The user of the own device is, for example, a worker who desires to refer to and grasp the determination result of the graph data. The first trained machine learning model may be acquired by, for example, the acquisition unit 501.

The predetermined determination processing is, for example, determination processing of determining a property corresponding to the graph data. The predetermined determination processing is specifically determination processing of determining a property of a compound indicated by the graph data. The predetermined determination processing is specifically performed by the second trained machine learning model. The second trained machine learning model is, for example, a trained machine learning model that generates a determination result of the graph data by the predetermined determination processing in response to the input of the graph data. The second trained machine learning model is specifically a GNN model. The storage unit 500 stores, for example, the second trained machine learning model. The storage unit 500 specifically stores a second parameter that defines the second trained machine learning model. The second trained machine learning model is set in advance by, for example, a user of the own device. The second trained machine learning model may be acquired by, for example, the acquisition unit 501.

The storage unit 500 stores, for example, a determination result of each piece of graph data of one or more pieces of graph data by the predetermined determination processing. The storage unit 500 specifically stores the determination result of each piece of graph data of the one or more pieces of graph data, which is generated by using the second trained machine learning model. The storage unit 500 specifically stores the history information management table 400 illustrated in FIG. 4. The determination result is generated by, for example, the determination unit 502. The determination result may be acquired by, for example, the acquisition unit 501.

The storage unit 500 may store, for example, a score corresponding to each element of an adjacency matrix of the graph data regarding a predetermined feature of each piece of graph data of the one or more pieces of graph data. The storage unit 500 may specifically store the score corresponding to each element of the adjacency matrix of the graph data regarding the predetermined feature of each piece of graph data of the one or more pieces of graph data, which is calculated by using the first trained machine learning model. The storage unit 500 specifically stores the history information management table 400 illustrated in FIG. 4. The score is calculated by, for example, the calculation unit 503. The score may be acquired by, for example, the acquisition unit 501.

The acquisition unit 501 acquires various types of information to be used in the processing of each functional unit. The acquisition unit 501 stores the acquired various types of information in the storage unit 500 or outputs the acquired various types of information to each functional unit. Furthermore, the acquisition unit 501 may output the various types of information stored in the storage unit 500 to each functional unit. The acquisition unit 501 acquires the various types of information based on, for example, an operation input from a user of the own device. The acquisition unit 501 may receive the various types of information from, for example, a device different from the information processing device 100.

The acquisition unit 501 may acquire, for example, the first graph data to be processed. The acquisition unit 501 specifically acquires the first graph data by accepting input of the first graph data based on an operation input from a user of the own device. The acquisition unit 501 specifically acquires the first graph data by receiving the first graph data from another computer.

The acquisition unit 501 may acquire, for example, the first determination result of the first graph data by the predetermined determination processing. The acquisition unit 501 specifically acquires the first determination result by accepting input of the first determination result of the first graph data by the predetermined determination processing based on an operation input from a user of the own device. The acquisition unit 501 specifically acquires the first determination result of the first graph data by the predetermined determination processing by receiving the first determination result from another computer. Specifically, it may be considered that the acquisition unit 501 acquires the first determination result in a case where the determination unit 502 of the own device does not generate the first determination result of the first graph data by the predetermined determination processing.

The acquisition unit 501 may acquire, for example, one or more first scores regarding a predetermined feature of the first graph data. The one or more first scores are calculated by using, for example, the first trained machine learning model. The acquisition unit 501 specifically acquires the one or more first scores by accepting input of the one or more first scores regarding the predetermined feature of the first graph data based on an operation input from a user of the own device. The acquisition unit 501 specifically acquires the one or more first scores regarding the predetermined feature of the first graph data by receiving the one or more first scores from another computer. Specifically, it may be considered that the acquisition unit 501 acquires the one or more first scores in a case where the calculation unit 503 of the own device does not calculate the one or more first scores regarding the predetermined feature of the first graph data.

The acquisition unit 501 may acquire, for example, the first trained machine learning model. The acquisition unit 501 specifically acquires the first parameter that defines the first trained machine learning model. The acquisition unit 501 more specifically acquires the first parameter that defines the first trained machine learning model by accepting input of the first parameter that defines the first trained machine learning model based on an operation input from a user of the own device. The acquisition unit 501 more specifically acquires the first parameter that defines the first trained machine learning model by receiving the first parameter from another computer.

The acquisition unit 501 may acquire, for example, the second trained machine learning model. The acquisition unit 501 specifically acquires the second parameter that defines the second trained machine learning model. The acquisition unit 501 more specifically acquires the second parameter that defines the second trained machine learning model by accepting input of the second parameter that defines the second trained machine learning model based on an operation input from a user of the own device. The acquisition unit 501 more specifically acquires the second parameter that defines the second trained machine learning model by receiving the second parameter from another computer.

The acquisition unit 501 may acquire, for example, one or more pieces of graph data. The graph data serves as, for example, a sample. The acquisition unit 501 specifically acquires the one or more pieces of graph data by accepting input of the one or more pieces of graph data based on an operation input from a user of the own device. The acquisition unit 501 specifically acquires the one or more pieces of graph data by receiving the one or more pieces of graph data from another computer.

The acquisition unit 501 may acquire, for example, a determination result of each piece of graph data of the one or more pieces of graph data by the predetermined determination processing. The acquisition unit 501 specifically acquires the determination result of each piece of graph data of the one or more pieces of graph data by the predetermined determination processing by accepting input of the determination result based on an operation input from a user of the own device. The acquisition unit 501 specifically acquires the determination result of each piece of graph data of the one or more pieces of graph data by the predetermined determination processing by receiving the determination result from another computer.

The acquisition unit 501 may acquire, for example, a score corresponding to each element of an adjacency matrix of the graph data regarding a predetermined feature of each piece of graph data of the one or more pieces of graph data. The acquisition unit 501 specifically acquires the score corresponding to each element of the adjacency matrix of the graph data regarding the predetermined feature of each piece of graph data of the one or more pieces of graph data by accepting input of the score based on an operation input from a user of the own device. The acquisition unit 501 specifically acquires the score corresponding to each element of the adjacency matrix of the graph data regarding the predetermined feature of each piece of graph data of the one or more pieces of graph data by receiving the score from another computer.

The acquisition unit 501 may accept a start trigger to start the processing of any one of the functional units. The start trigger is, for example, a predetermined operation input from a user of the own device. The start trigger may be, for example, reception of predetermined information from another computer. The start trigger may be, for example, output of predetermined information by any one of the functional units.

The acquisition unit 501 may accept, for example, the fact that the first graph data has been acquired as a start trigger to start the processing of the determination unit 502, the calculation unit 503, and the specification unit 504. The acquisition unit 501 may accept, for example, the fact that the first determination result and the one or more first scores have been acquired as a start trigger to start the processing of the specification unit 504.

The determination unit 502 performs the predetermined determination processing for graph data, and generates a determination result of the graph data. The determination unit 502 generates, for example, the first determination result of the first graph data by the predetermined determination processing. The determination unit 502 specifically generates, by the second trained machine learning model, the first determination result of the first graph data by the predetermined determination processing by inputting the first graph data to the second trained machine learning model. The determination unit 502 may specifically store the first graph data and the first determination result of the first graph data in the storage unit 500 in association with each other. With this configuration, the determination unit 502 may allow a worker to refer to the first determination result of the first graph data.

The determination unit 502 may generate, for example, a determination result of each piece of graph data of one or more pieces of graph data by the predetermined determination processing. The determination unit 502 specifically generates, by the second trained machine learning model, the determination result of each piece of graph data by the predetermined determination processing by inputting each piece of graph data of the one or more pieces of graph data to the second trained machine learning model. The determination unit 502 specifically stores, in the storage unit 500, each piece of graph data of the one or more pieces of graph data and the determination result of the graph data in association with each other. With this configuration, the determination unit 502 may appropriately update the content stored in the storage unit 500.

The calculation unit 503 performs the predetermined calculation processing, and calculates one or more scores regarding a predetermined feature of graph data. The predetermined calculation processing is, for example, estimation processing of estimating a basis of a determination result of the graph data by the predetermined determination processing. The predetermined calculation processing is specifically calculation processing of calculating a score regarding a predetermined feature corresponding to each element of an adjacency matrix of the graph data as the basis of the determination result of the graph data by the predetermined determination processing.

The calculation unit 503 calculates, for example, one or more first scores regarding a predetermined feature of the first graph data. The calculation unit 503 specifically calculates, by the first trained machine learning model, the one or more first scores by inputting the first graph data to the first trained machine learning model. The calculation unit 503 may store the first graph data and the calculated one or more first scores in the storage unit 500 in association with each other. With this configuration, the calculation unit 503 may obtain basis information representing a basis of the first determination result.

The calculation unit 503 may calculate, for example, one or more second scores regarding a predetermined feature of the second graph data specified by the specification unit 504. The calculation unit 503 specifically calculates, by the first trained machine learning model, the one or more second scores by inputting the second graph data to the first trained machine learning model. The calculation unit 503 may store the second graph data and the calculated one or more second scores in the storage unit 500 in association with each other. With this configuration, the calculation unit 503 may obtain the one or more second scores, which serves as reference information for facilitating interpretation of the basis information representing the basis of the first determination result.

The calculation unit 503 may calculate, for example, one or more scores regarding a predetermined feature of each piece of graph data of one or more pieces of graph data. The calculation unit 503 specifically calculates, by the first trained machine learning model, the one or more first scores by inputting each piece of graph data of the one or more pieces of graph data to the first trained machine learning model. The calculation unit 503 may store each piece of graph data of the one or more pieces of graph data and the calculated one or more scores in the storage unit 500 in association with each other. With this configuration, the calculation unit 503 may appropriately update the content stored in the storage unit 500.

The specification unit 504 determines whether or not each first score of acquired one or more first scores is less than a threshold. The threshold is set in advance by, for example, a user of the own device. For example, a case may be considered where all the first scores of the one or more first scores are less than the threshold, and there is no first score that is equal to or greater than the threshold among the one or more first scores.

In this case, the specification unit 504 refers to the storage unit 500 to specify the second graph data that is the second determination result different from the acquired first determination result among the one or more pieces of graph data. The specification unit 504 refers to the storage unit 500 to specify, for example, the second graph data associated with the second determination result indicating content reverse to that of the first determination result. With this configuration, the specification unit 504 may obtain the second graph data, which serves as the reference information for facilitating interpretation of the basis information representing the basis of the first determination result.

For example, the specification unit 504 may calculate, for each piece of graph data of the one or more pieces of graph data, an index value indicating magnitude of a difference between the graph data and the first graph data. The index value is, for example, a distance between graphs represented by the respective pieces of graph data. The index value indicates, for example, similarity between the respective pieces of graph data.

The index value is, for example, a distance between the graphs represented by the respective pieces of graph data in a multidimensional space having parameters of nodes of the graphs as the respective dimensions. The parameter of the node indicates, for example, content of the node. The parameter of the node may indicate, for example, a type of an element forming a compound corresponding to the node. The distance is, for example, a Euclidean distance.

The index value indicates, for example, how many edges needs to be added to or deleted from one graph among the graphs represented by the respective pieces of graph data to match with another graph. The index value is expressed by, for example, the number of edges to be added or deleted. The index value may indicate, for example, magnitude of a difference between adjacency matrices of the respective pieces of graph data. The index value may be specifically a distance between the adjacent matrices of the respective pieces of graph data in a multidimensional space having values of the respective elements of the adjacency matrices as the respective dimensions. The index value may indicate, for example, magnitude of a difference between compounds represented by the respective pieces of graph data. The index value may be specifically a difference between property values of the compounds represented by the respective pieces of graph data.

With this configuration, the specification unit 504 may obtain a guideline for specifying the second graph data, and in a case where there is a plurality of candidates of the second graph data, may facilitate specification of the second graph data. The specification unit 504 may facilitate specification of the second graph data suitable as an object to be compared with the first graph data among the candidates of the second graph data.

Specifically, in a case where there is no first score that is equal to or greater than the threshold among the one or more first scores, the specification unit 504 may calculate, for each piece of graph data of the one or more pieces of graph data, an index value indicating magnitude of a difference between the graph data and the first graph data. With this configuration, the specification unit 504 may suppress an increase in a processing load due to the processing of calculating the index value.

As described above, there may be a case where all the first scores of the one or more first scores are less than the threshold, and there is no first score that is equal to or greater than the threshold among the one or more first scores. In this case, for example, the specification unit 504 refers to the storage unit 500 to specify, among the one or more pieces of graph data, the second graph data that is the second determination result different from the acquired first determination result and has the calculated index value less than a reference value. The reference value is set in advance by, for example, a user of the own device.

With this configuration, the specification unit 504 may obtain the second graph data, which serves as the reference information for facilitating interpretation of the basis information representing the basis of the first determination result. The specification unit 504 may facilitate specification of the second graph data suitable as an object to be compared with the first graph data among the candidates of the second graph data. For example, the specification unit 504 may specify, as the second graph data, a candidate of the second graph data representing a graph relatively similar to that of the first graph data but having a different determination result among the candidates of the second graph data.

Here, when it is assumed that the candidate of the second graph data represents a graph relatively similar to that of the first graph data but having a determination result different from that of the first graph data, a difference between the candidate and the first graph data is considered to be a cause of the difference in the determination result. It may be considered that the larger a degree of similarity between the candidate of the second graph data having the determination result different from that of the first graph data and the first graph data, the higher probability that the difference between the candidate and the first graph data represents only the cause of the difference in the determination result. Therefore, the information processing device 100 may facilitate specification of the second graph data suitable as an object to be compared with the first graph data.

The output unit 505 outputs a processing result of at least any one of the functional units. The output format is, for example, display on a display, print output to a printer, transmission to an external device by the network I/F 303, or storage in a storage area such as the memory 302 or the recording medium 305. With this configuration, the output unit 505 may make it possible for a user of the own device to be notified of the processing result of at least any one of the functional units, and may achieve improvement in convenience of the information processing device 100.

The output unit 505 outputs information regarding a predetermined feature of the specified second graph data in association with the acquired first determination result. The information regarding the predetermined feature is, for example, the second graph data itself. The information regarding the predetermined feature may be, for example, the one or more second scores. With this configuration, the output unit 505 may make it easier for a worker who uses the first graph data to interpret the basis of the first determination result of the first graph data.

The output unit 505 outputs the second determination result, the second graph data, and the one or more second scores in association with the acquired first determination result. With this configuration, the output unit 505 may allow a worker who uses the first graph data to refer to the second determination result, the second graph data, and the one or more second scores so as to facilitate interpretation of the basis of the first determination result of the first graph data.

The output unit 505 outputs the second determination result stored in the storage unit 500, the specified second graph data, the calculated one or more second scores, the first graph data, and the acquired one or more first scores in association with the acquired first determination result. With this configuration, the output unit 505 may allow the worker who uses the first graph data to refer to the one or more first scores that are the basis of the first determination result of the first graph data. The output unit 505 may allow the worker who uses the first graph data to refer to the second determination result, the second graph data, and the one or more second scores so as to facilitate interpretation of the basis of the first determination result of the first graph data.

In a case where at least any one first score of the acquired one or more first scores is equal to or greater than the threshold, the output unit 505 outputs the first graph data and the one or more first scores in association with the first determination result. With this configuration, the output unit 505 may allow the worker who uses the first graph data to refer to the one or more first scores that are the basis of the first determination result of the first graph data.

Here, a case has been described where the information processing device 100 includes the acquisition unit 501, the determination unit 502, the calculation unit 503, the specification unit 504, and the output unit 505. However, the embodiment is not limited to this. For example, there may be a case where the information processing device 100 does not include any one of the functional units. For example, there may be a case where the information processing device 100 does not include the determination unit 502 and the calculation unit 503. In this case, it may be considered that the information processing device 100 acquires the first determination result, the one or more first scores, and the like by the acquisition unit 501.

### (Operation Example of Information Processing Device 100)

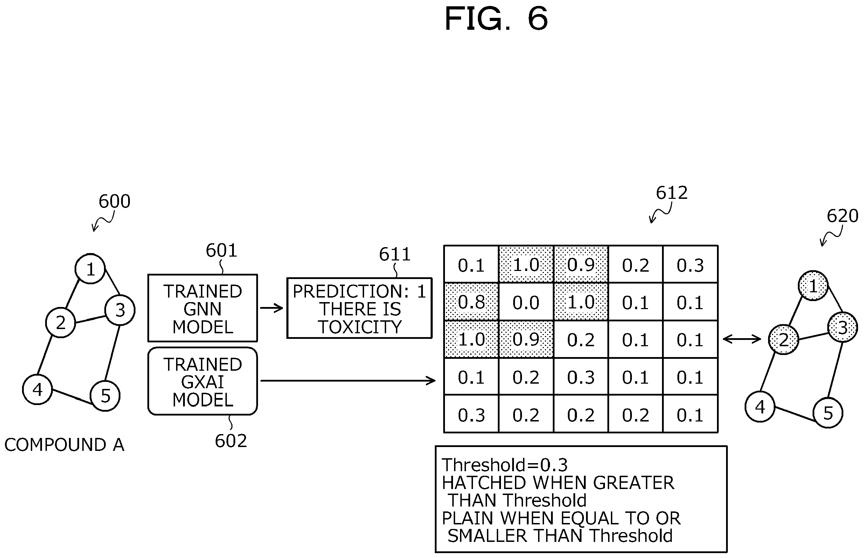

Next, an operation example of the information processing device 100 will be described with reference to FIGs. 6 to 9.

FIGs. 6 to 9 are explanatory diagrams illustrating the operation example of the information processing device 100. In FIGs. 6 to 9, the information processing device 100 stores a trained GNN model 601. The trained GNN model 601 is a model that generates and outputs a determination result of a graph instance by predetermined determination processing in response to input of the graph instance.

The graph instance is graph data corresponding to a compound. The graph instance represents, for example, a graph. The graph instance specifically indicates one or more nodes forming the graph and one or more edges coupling the nodes. The predetermined determination processing is determination processing of determining whether or not the compound has toxicity. The determination result indicates whether or not the compound has toxicity.

The information processing device 100 stores a trained GXAI model 602. The trained GXAI model 602 is a model that calculates and outputs a score corresponding to each element of an adjacency matrix of the graph represented by the graph instance in response to the input of the graph instance. The score represents a basis of the determination result of the graph instance generated by the trained GNN model 601.

The information processing device 100 stores the history information management table 400 including a record in which each graph instance of one or more graph instances is associated with the determination result of the graph instance generated by the trained GNN model 601. The record may further include a score matrix indicating the score corresponding to each element of the adjacency matrix of the graph represented by the graph instance, which is calculated by the trained GXAI model 602, in association with the graph instance. Here, a row number and a column number of each score of the score matrix specifically correspond to a row number and a column number of each element of the adjacency matrix of the graph represented by the graph instance.

In FIG. 6, the information processing device 100 acquires a graph instance 600 of a compound A to be processed. The graph instance 600 is a graph instance corresponding to the compound A. The graph instance 600 represents, for example, a graph. The graph instance 600 specifically indicates one or more nodes forming the graph and one or more edges coupling the nodes. The graph instance 600 is specifically specified by a worker who intends to grasp whether or not the compound A has toxicity.
(6-1) The information processing device 100 generates a determination result 611 of the graph instance 600 by inputting the graph instance 600 to the trained GNN model 601. The determination result 611 indicates whether or not the compound A corresponding to the graph instance 600 has toxicity. The determination result 611 includes, for example, flag information indicating whether or not the compound A has toxicity. The flag information indicates that, for example, there is toxicity when the value is 1, and indicates that there is no toxicity when the value is 0. In the example of FIG. 6, the determination result 611 specifically includes the flag information having the value of 1, and indicates that the compound A has toxicity.
(6-2) The information processing device 100 calculates a score corresponding to each element of an adjacency matrix of a graph represented by the graph instance 600, by inputting the graph instance 600 to the trained GXAI model 602. The score represents a basis of the determination result 611 of the graph instance 600. The information processing device 100 stores a score matrix 612 indicating the calculated score corresponding to each element of the adjacency matrix of the graph represented by the graph instance 600. The information processing device 100 may add, to the history information management table 400, a record in which the graph instance 600, the determination result 611 of the graph instance 600, and the score matrix 612 are associated with each other.
(6-3) The information processing device 100 determines whether or not each score indicated by the score matrix 612 is equal to or smaller than Threshold. For example, the Threshold is 0.3. In the drawing, scores greater than the Threshold are hatched.
   In the example of FIG. 6, the information processing device 100 determines that, in the score matrix 612, a score in a first row and a second column, a score in the first row and a third column, a score in a second row and a first column, a score in the second row and the third column, a score in a third row and the first column, and a score in the third row and the second column are greater than the Threshold. The information processing device 100 determines that, in the score matrix 612, scores other than the score in the first row and the second column, the score in the first row and the third column, the score in the second row and the first column, the score in the second row and the third column, the score in the third row and the first column, and the score in the third row and the second column are equal to or smaller than the Threshold.
(6-4) In a case where at least any one of the scores in the score matrix 612 is greater than the Threshold, the information processing device 100 outputs, together with the determination result 611, basis information representing the basis of the determination result 611. The basis information is, for example, the score matrix 612.

The basis information may be, for example, a graph instance 620 indicating a graph representing the compound A so as to be able to identify a node and an edge in the graph corresponding to the score greater than the Threshold in the score matrix 612. The information processing device 100 specifically outputs the score matrix 612 and the graph instance 620 in association with each other so as to be referable by a worker.

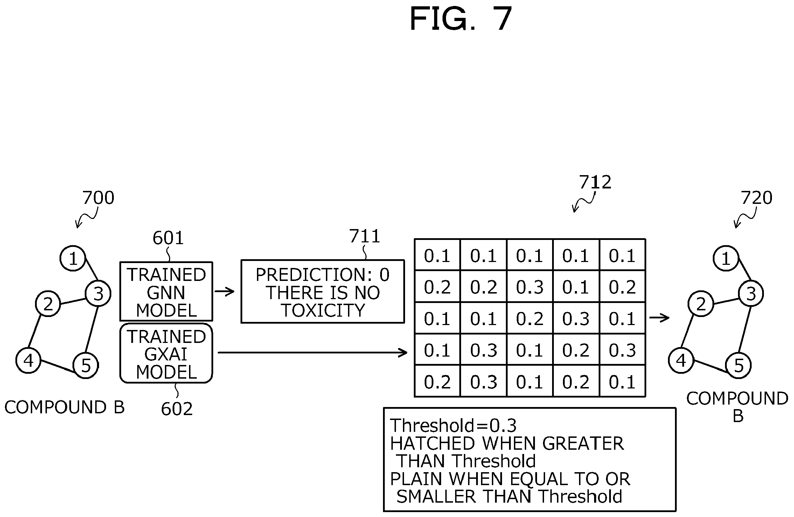

With this configuration, the information processing device 100 may allow the worker to refer to the determination result 611. The information processing device 100 may allow the worker to refer to the basis information representing the basis of the determination result 611. The information processing device 100 may make it easier for the worker to be convinced of the basis, a reason, or the like of the determination result 611 by referring to the basis information representing the basis of the determination result 611. Next, description of FIG. 7 will be made.

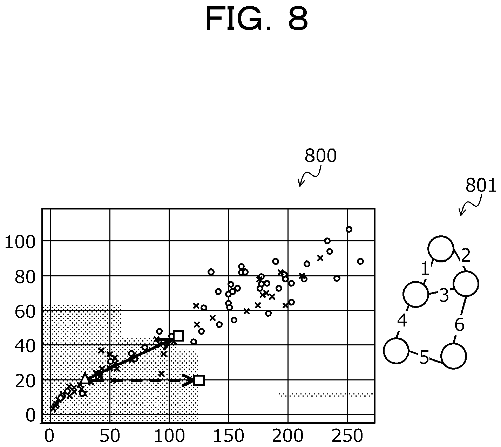

In FIG. 7, the information processing device 100 acquires a graph instance 700 of a compound B to be processed. The graph instance 700 is a graph instance corresponding to the compound B. The graph instance 700 represents, for example, a graph. The graph instance 700 specifically indicates one or more nodes forming the graph and one or more edges coupling the nodes. The graph instance 700 is specifically specified by a worker who intends to grasp whether or not the compound B has toxicity.
(7-1) The information processing device 100 generates a determination result 711 of the graph instance 700 by inputting the graph instance 700 to the trained GNN model 601. The determination result 711 indicates whether or not the compound B corresponding to the graph instance 700 has toxicity. The determination result 711 includes, for example, flag information indicating whether or not the compound B has toxicity. The flag information indicates that, for example, there is toxicity when the value is 1, and indicates that there is no toxicity when the value is 0. In the example of FIG. 7, the determination result 711 specifically includes the flag information having the value of 0, and indicates that the compound B has no toxicity.
(7-2) The information processing device 100 calculates a score corresponding to each element of an adjacency matrix of a graph represented by the graph instance 700, by inputting the graph instance 700 to the trained GXAI model 602. The score represents a basis of the determination result 711 of the graph instance 700. The information processing device 100 stores a score matrix 712 indicating the calculated score corresponding to each element of the adjacency matrix of the graph represented by the graph instance 700.
(7-3) The information processing device 100 determines whether or not each score indicated by the score matrix 712 is equal to or smaller than Threshold. In the example of FIG. 7, the information processing device 100 determines that all the scores in the score matrix 712 are equal to or smaller than the Threshold.
(7-4) In a case where all the scores in the score matrix 712 are equal to or smaller than the Threshold, the information processing device 100 generates reference information that assists basis information representing the basis of the determination result 711. The basis information is, for example, the score matrix 712. The basis information may be, for example, a graph instance 720 indicating a graph representing the compound B so as to be able to identify that there is no score greater than the Threshold in the score matrix 712. Next, description of FIG. 8 will be made.

In FIG. 8, the information processing device 100 generates the reference information that assists the basis information representing the basis of determination result 711. For example, the information processing device 100 refers to the history information management table 400 to specify, as the reference information that assists the basis information representing the basis of the determination result 711, any graph instance which is a determination result indicating content reverse to that of the determination result 711. For example, since the flag information of the determination result 711 is 0, the information processing device 100 refers to the history information management table 400 to specify any graph instance in which the flag information is 1 as the reference information that assists the basis information representing the basis of the determination result 711.

In the example of FIG. 8, specifically, the information processing device 100 refers to the history information management table 400 to calculate a distance between the graph instance 700 and each graph instance in which the flag information is 1. The distance is, for example, a distance in a multidimensional space 800 having a parameter of a graph instance as each dimension. Regarding a method of calculating the distance, specifically, Reference Document 1 below may be referred to.

Reference Document 1: Goddard, Wayne, and Ortrud R. Oellermann, "Distance in graphs", Structural Analysis of Complex Networks, Birkhauser Boston, 2011, 49-72

Furthermore, the information processing device 100 refers to the history information management table 400 to divide the multidimensional space 800 into an area where a graph instance indicating a graph representing a compound having no toxicity exists and an area where a graph instance indicating a graph representing a compound having toxicity exists.

For convenience, any two-dimensional plane forming the multidimensional space 800 is illustrated in the drawing. In the drawing, ∘ indicates a position corresponding to a graph instance in which the flag information is 0. In the drawing, × indicates a position corresponding to a graph instance in which the flag information is 1. In the drawing, △ specifically indicates a position corresponding to the graph instance 700. In the drawing, □ specifically indicates a position corresponding an example of to the graph instance in which the flag information is 1.

In the drawing, a hatched area corresponds to the area where the graph instance indicating the graph representing the compound having no toxicity exists. In the drawing, a plain area specifically corresponds to the area where the graph instance indicating the graph representing the compound having toxicity exists.

The information processing device 100 specifically specifies one or more graph instances which exist in the area obtained by the division where the graph instance indicating the graph representing the compound having toxicity and in which the flag information is 1. The information processing device 100 specifically specifies, as the reference information, a graph instance 801 having a relatively short calculated distance among the specified one or more graph instances. The graph instance 801 is, for example, the graph instance 600. Regarding an example of specifying any graph instance that is a determination result indicating content reverse to that of a certain determination result, specifically, Reference Document 2 below may be referred to.

Reference Document 2: Kanamori, Kentaro, et al., "DACE: Distribution-Aware Counterfactual Explanation by Mixed-Integer Linear Optimization", IJCAI, 2020

The information processing device 100 may calculate, as the reference information, a score corresponding to each element of an adjacency matrix of a graph represented by the specified graph instance 801. The information processing device 100 outputs, together with the determination result 711, the basis information representing the basis of the determination result 711 and the reference information that assists the basis information representing the basis of determination result 711. The information processing device 100 specifically outputs the score matrix 712 and the graph instance 720 in association with the specified graph instance 801 so as to be referable by a worker.

With this configuration, the information processing device 100 may allow the worker to refer to the determination result 711. The information processing device 100 may allow the worker to refer to the basis information representing the basis of the determination result 711. The information processing device 100 may allow the worker to refer to the reference information that assists the basis information representing the basis of the determination result 711.

The information processing device 100 may make it easier for the worker to interpret what the basis information representing the basis of the determination result 711 means by referring to the reference information that assists the basis information representing the basis of the determination result 711. For example, the information processing device 100 may allow the worker to compare the graph instance 700 with the graph instance 801.

The information processing device 100 may specifically allow the worker to grasp that a topological feature of the graph represented by the graph instance 801 does not appear in the graph represented by the graph instance 700 based on a result of the comparison. Thus, the information processing device 100 may make it easier for the worker to interpret what the basis information representing the basis of the determination result 711 means.

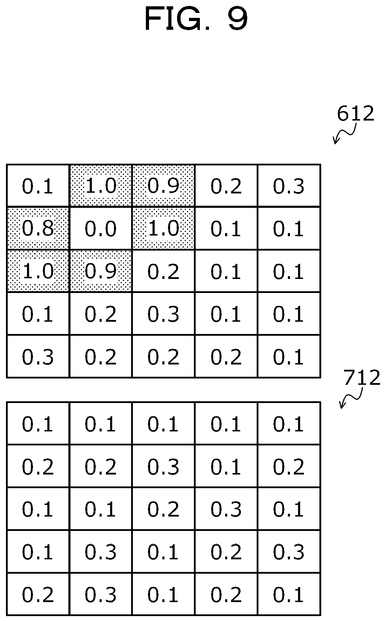

Then, the information processing device 100 may make it easier for the worker to be convinced of the basis, a reason, or the like of the determination result 711 based on a result of the interpretation of the basis information representing the basis of the determination result 711. Next, description of FIG. 9 will be made, and how the information processing device 100 controls whether or not to generate the reference information will be described in detail.

In FIG. 9, a case may be considered where at least any one of the scores is greater than the Threshold, as in the score matrix 612. In this case, it may be considered that the graph represented by the graph instance 600 has a topological feature that may be the basis of the determination result 611. Furthermore, it is considered that any one of the scores greater than the Threshold represents at which position in the graph represented by the graph instance 600 the topological feature appears. The position is, for example, a combination of a node and an edge.

Thus, it may be considered that, in a case where at least any one of the scores is greater than the Threshold, a worker may be easily convinced of the any one of the scores as the basis of the determination result 611, and may easily interpret what the any one of the scores means. Therefore, in this case, the information processing device 100 may determine that the reference information that assists the basis information representing the basis of the determination result 611 does not have to be generated.

The information processing device 100 may make it unnecessary to generate the reference information that assists the basis information representing the basis of the determination result 611, and may suppress an increase in a processing load. The information processing device 100 may output the basis information representing the basis of the determination result 611, and may make it easier for the worker to be convinced of the basis, the reason, or the like of the determination result 611 by referring to the basis information representing the basis of the determination result 611.

On the other hand, a case may be considered where all the scores are equal to or smaller than the Threshold, and there is no score greater than the Threshold, as in the score matrix 712. In this case, it may be considered that the graph represented by the graph instance 700 does not have a topological feature that may be the basis of the determination result 711. In other words, the basis of the determination result 711 is that the graph represented by the graph instance 700 does not have a specific topological feature.

However, in a case where all the scores are equal to or smaller than the Threshold, it is difficult for the worker to be convinced of that the graph represented by the graph instance 700 does not have the specific topological feature as the basis of the determination result 711 even when the worker refers to the scores. For example, the worker may interpret that all the scores are equal to or smaller than the Threshold as indicating that accuracy of the GXAI model 602 is poor, and it may be difficult for the worker to be convinced of that as the basis of the determination result 711.

Therefore, in this case, the information processing device 100 may determine that it is preferable to generate the reference information that assists the basis information representing the basis of the determination result 711. The information processing device 100 may specify, as the reference information, another graph instance to be compared with the graph instance 700, which is a determination result indicating content reverse to that of the determination result 711. For example, since it is the determination result indicating the content reverse to that of the determination result 711, the information processing device 100 may specify another graph instance representing a graph considered to have a specific topological feature.

The information processing device 100 may output the specified graph instance so that the specified graph instance may be compared with the graph instance 700. The information processing device 100 may allow the worker to compare the graph instance 700 representing the graph that does not have the specific topological feature with the another graph instance representing the graph considered to have the specific topological feature.

Thus, the information processing device 100 may make it easier for the worker to interpret that the basis information indicating that all the scores are equal to or smaller than the Threshold indicates that the graph represented by the graph instance 700 does not have the specific topological feature. The information processing device 100 may make it unnecessary for the worker to interpret that the basis information indicating that all the scores are equal to or smaller than the Threshold indicates that the accuracy of the GXAI model 602 is poor.

In this way, the information processing device 100 may make it easier for the worker to interpret what the basis information representing the basis of the determination result 711 means by referring to the reference information that assists the basis information representing the basis of the determination result 711. Then, the information processing device 100 may make it easier for the worker to interpret what the basis information representing the basis of the determination result 711 means.

### (Overall Processing Procedure)

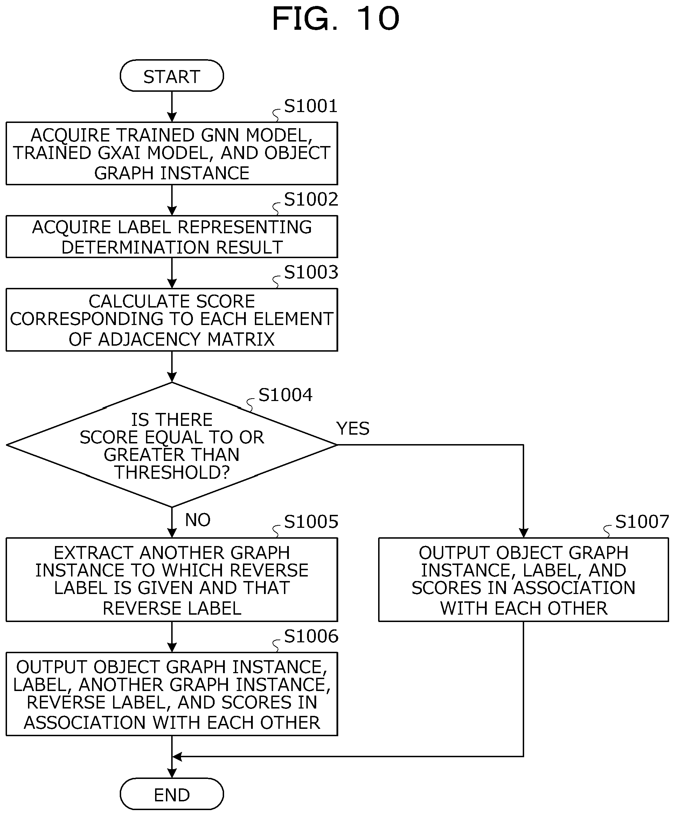

Next, an example of an overall processing procedure executed by the information processing device 100 will be described with reference to FIG. 10. The overall processing is implemented by, for example, the CPU 301, a storage area such as the memory 302 or the recording medium 305, and the network I/F 303 illustrated in FIG. 3.

FIG. 10 is a flowchart illustrating an example of the overall processing procedure. In FIG. 10, the information processing device 100 acquires a trained GNN model, a trained GXAI model, and an object graph instance (Step S1001).

Next, the information processing device 100 performs determination processing for the object graph instance by using the trained GNN model, acquires a label representing a determination result, and gives the acquired label to the object graph instance (Step S1002). Then, the information processing device 100 performs calculation processing for the object graph instance by using the trained GXAI model, and calculates a score corresponding to each element of an adjacency matrix as a basis of the determination result (Step S1003).

Next, the information processing device 100 determines whether or not there is a score equal to or greater than a threshold among the calculated scores (Step S1004). Here, in a case where there is a score equal to or greater than the threshold (Step S1004: Yes), the information processing device 100 proceeds to processing in Step S1007. On the other hand, in a case where there is no score equal to or greater than the threshold (Step S1004: No), the information processing device 100 proceeds to processing in Step S1005.

In Step S1005, the information processing device 100 extracts another graph instance to which a reverse label indicating a determination result reverse to that of the label given to the object graph instance is given, and the reverse label (Step S1005).

Next, the information processing device 100 outputs the acquired object graph instance, the acquired label, the extracted another graph instance, the extracted reverse label, and the calculated scores in association with each other (Step S1006). Then, the information processing device 100 ends the overall processing.

In Step S1007, the information processing device 100 outputs the acquired object graph instance, the acquired label, and the calculated scores in association with each other (Step S1007). Then, the information processing device 100 ends the overall processing. With this configuration, the information processing device 100 may make it easier for worker to interpret a basis of the determination result as the label.

Here, the information processing device 100 may switch some steps in the processing order in FIG. 10 and execute the processing. For example, Steps S1002 and S1003 may be switched in the processing order. Furthermore, the information processing device 100 may omit the processing in some steps in FIG. 10.

As described above, according to the information processing device 100, it is possible to acquire the first determination result of the first graph data by the predetermined determination processing. According to the information processing device 100, it is possible to acquire the one or more first scores regarding the predetermined feature of the first graph data, which are calculated by using the first trained machine learning model. According to the information processing device 100, in a case where all the first scores of the acquired one or more first scores are less than the threshold, it is possible to refer to the storage unit 500 to specify the second graph data that is the second determination result different from the acquired first determination result among the one or more pieces of graph data. According to the information processing device 100, it is possible to output the information regarding the predetermined feature of the specified second graph data in association with the acquired first determination result. With this configuration, the information processing device 100 may make it easier for the worker to interpret the one or more first scores and to understand the first determination result.

According to the information processing device 100, it is possible to calculate the one or more second scores regarding the predetermined feature of the specified second graph data by using the first trained machine learning model. According to the information processing device 100, it is possible to output the second determination result, the specified second graph data, and the calculated one or more second scores in association with the acquired first determination result. With this configuration, the information processing device 100 may allow the worker to refer to the second graph data and the one or more second scores, and may make it easier for the worker to efficiently interpret the one or more first scores and to understand the first determination result.

According to the information processing device 100, it is possible to output the second determination result, the specified second graph data, the calculated one or more second scores, the first graph data, and the acquired one or more first scores in association with the acquired first determination result. With this configuration, the information processing device 100 may allow the worker to compare a combination of the second graph data and the one or more second scores with a combination of the first graph data and the one or more first scores. Thus, the information processing device 100 may make it easier for the worker to efficiently interpret the one or more first scores and to understand the first determination result.

According to the information processing device 100, in a case where at least any one first score of the acquired one or more first scores is equal to or greater than the threshold, it is possible to output the first graph data and the acquired one or more first scores in association with the acquired first determination result. With this configuration, the information processing device 100 may allow the worker to refer to the one or more first scores representing the basis of the first determination result. The information processing device 100 may make it unnecessary to specify the second graph data, and may suppress an increase in a processing load.

According to the information processing device 100, it is possible to store the first trained machine learning model that calculates, in response to the input of the graph data, the score corresponding to each element of the adjacency matrix of the graph data regarding the predetermined feature of the graph data, which represents the basis of the determination result of the graph data by the predetermined determination processing. With this configuration, the information processing device 100 may make it possible to acquire the one or more first scores calculated with relatively high accuracy, and may facilitate interpretation of the one or more first scores.

According to the information processing device 100, it is possible to calculate, for each piece of graph data of the one or more pieces of graph data, the index value indicating the magnitude of the difference between the graph data and the first graph data. According to the information processing device 100, in a case where all the first scores of the one or more first scores are less than the threshold, it is possible to specify, among the one or more pieces of graph data, the second graph data that is the second determination result different from the acquired first determination result and has the calculated index value less than the reference value. With this configuration, the information processing device 100 may facilitate specification of the second graph data suitable as the object to be compared with the first graph data.

According to the information processing device 100, it is possible to acquire the one or more first scores calculated by the first trained machine learning model by inputting the first graph data to the first trained machine learning model. With this configuration, the information processing device 100 may make it unnecessary to calculate the one or more first scores by another computer.

According to the information processing device 100, it is possible to acquire the first determination result of the first graph data by the predetermined determination processing generated by the second trained machine learning model by inputting the first graph data to the second trained machine learning model. With this configuration, the information processing device 100 may make it unnecessary to generate the first determination result by another computer.

According to the information processing device 100, by inputting each piece of graph data of the one or more pieces of graph data to the second trained machine learning model, it is possible to acquire the determination result of each piece of graph data by the predetermined determination processing generated by the second trained machine learning model, and to store the acquired determination result in the storage unit 500. With this configuration, the information processing device 100 may appropriately update the content stored in the storage unit 500.

According to the information processing device 100, the network topological feature may be adopted as the predetermined feature. With this configuration, the information processing device 100 may acquire the first determination result in consideration of the network topological feature. The information processing device 100 may make it easier for the worker to understand the first determination result in consideration of the network topological feature.

Note that the determination method described in the present embodiment may be implemented by executing, in a computer such as a PC or a workstation, a program prepared in advance. The determination program described in the present embodiment is executed by being recorded in a computer-readable recording medium and being read from the recording medium by the computer. The recording medium is a hard disk, a flexible disk, a compact disc (CD)-ROM, a magneto optical disc (MO), a digital versatile disc (DVD), or the like. Furthermore, the determination program described in the present embodiment may be distributed via a network such as the Internet.

## Claims

1. A determination program comprising instructions which, when executed by a computer, cause the computer to execute processing comprising:
acquiring a first determination result of first graph data by performing predetermined determination processing on the first graph data;
acquiring one or more first scores regarding a predetermined feature of the first graph data by using a trained machine learning model, the one or more first scores including one or more scores representing a basis of the first determination result of the first graph data, the trained machine learning model being a trained model configured to output, in response to obtaining graph data, one or more scores regarding the predetermined feature of the graph data;
in a case where all the first scores of the acquired one or more first scores are less than a threshold, referring to a storage device, to specify among one or more pieces of graph data, second graph data that is a second determination result different from the acquired first determination result, the storage device being a device that stores, for each piece of graph data of the one or more pieces of graph data, a determination result obtained by performing the predetermined determination processing on the piece of graph data; and
outputting, in association with the acquired first determination result, information regarding the predetermined feature of the specified second graph data.

2. The determination program according to claim 1, the processing further comprising:
calculating one or more second scores regarding the predetermined feature of the specified second graph data by using the trained machine learning model,
wherein, in the processing of outputting,
the second determination result stored in the storage unit, the specified second graph data, and the calculated one or more second scores are output in association with the acquired first determination result.

3. The determination program according to claim 2, wherein the outputting includes
outputting, in association with the acquired first determination result, the second determination result stored in the storage device, the specified second graph data, the calculated one or more second scores, the first graph data, and the acquired one or more first scores.

4. The determination program according to any one of claims 1 to 3, wherein the outputting includes
in a case where at least any one first score of the acquired one or more first scores is equal to or greater than the threshold, outputting, in association with the acquired first determination result, the first graph data and the acquired one or more first scores are output.

5. The determination program according to any one of claims 1 to 3, wherein the trained machine learning model calculates, in response to obtaining the graph data, a score that corresponds to each element of an adjacency matrix with respect to the graph data, the calculated score being a score regarding a predetermined feature of the graph data and representing a basis of a determination result of the graph data by the predetermined determination processing.

6. The determination program according to any one of claims 1 to 3, the processing further including:
calculating, for each piece of graph data of the one or more pieces of graph data, an index value that indicates magnitude of a difference between the graph data and the first graph data,
wherein the specifying includes
in a case where all the first scores of the acquired one or more first scores are less than the threshold, referring to the storage device, to specify, among the one or more pieces of graph data, the second graph data that is a second determination result different from the acquired first determination result and that has the calculated index value less than a reference value.

7. A determination method implemented by a computer, the determination method comprising:
acquiring, in a hardware processor of the computer, a first determination result of first graph data by performing predetermined determination processing on the first graph data;
acquiring, in the hardware processor of the computer, one or more first scores regarding a predetermined feature of the first graph data by using a trained machine learning model, the one or more first scores including one or more scores representing a basis of the first determination result of the first graph data, the trained machine learning model being a trained model configured to output, in response to obtaining graph data, one or more scores regarding the predetermined feature of the graph data;
in a case where all the first scores of the acquired one or more first scores are less than a threshold, referring to a storage device, to specify among one or more pieces of graph data, second graph data that is a second determination result different from the acquired first determination result, the storage device being a device that stores, for each piece of graph data of the one or more pieces of graph data, a determination result obtained by performing the predetermined determination processing on the piece of graph data; and
outputting, in association with the acquired first determination result, information regarding the predetermined feature of the specified second graph data.

8. An information processing apparatus comprising a control unit configured to perform determination processing including:
acquiring a first determination result of first graph data by performing predetermined determination processing on the first graph data;
acquiring one or more first scores regarding a predetermined feature of the first graph data by using a trained machine learning model, the one or more first scores including one or more scores representing a basis of the first determination result of the first graph data, the trained machine learning model being a trained model configured to output, in response to obtaining graph data, one or more scores regarding the predetermined feature of the graph data;
in a case where all the first scores of the acquired one or more first scores are less than a threshold, referring to a storage device, to specify among one or more pieces of graph data, second graph data that is a second determination result different from the acquired first determination result, the storage device being a device that stores, for each piece of graph data of the one or more pieces of graph data, a determination result obtained by performing the predetermined determination processing on the piece of graph data; and
outputting, in association with the acquired first determination result, information regarding the predetermined feature of the specified second graph data.
